# EUROPEAN PATENT APPLICATION

(11) **EP 4 376 515 A1**
(43) Date of publication of application: **29.05.2024**
(21) Application number: 22846291.7
(22) Date of filing: 22.07.2022
(51) Int. Cl.: H04W 68/02, H04W 88/06, H04W 76/20, H04W 76/18, H04W 80/10, H04L 65/1104, H04L 65/1016

(54) **METHOD AND APPARATUS FOR OPERATING TERMINAL AND NETWORK IN WIRELESS COMMUNICATION SYSTEM**

(30) Priority: 22.07.2021 KR 20210096674
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2022/010775
(87) International publication number: WO 2023/003421

(57) **Abstract**

Herein disclosure is a method for providing paging to a terminal supporting Multi-SIM in a wireless communication system, and the method may include providing, by a network, a service based on a first SIM to a terminal, detecting, by the network, occurrence of a voice service based on a second SIM of the terminal, delivering paging with a paging cause to the terminal, and providing the voice service based on the second SIM after switching the terminal from the first SIM to the second SIM.

## Description

### Technical Field

The present disclosure relates to a wireless communication system, and more particularly, to a method for operating a terminal and a network. Specifically, the present disclosure relates to a method for delivering paging based on a voice service to a terminal supporting Multi-SIM.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure may provide a method and device for operating a terminal and a network in a wireless communication system.

The present disclosure may provide a method and device in which a network delivers paging including a paging cause based on a voice service to a terminal supporting Multi-SIM in a wireless communication system.

The present disclosure may provide a method and device for indicating a voice service while transmitting a non-access stratum (NAS) message for proxy call state control function (P-CSCF) restoration procedure in a wireless communication system.

The present disclosure may provide a method and device in which an access and mobility management function (AMF) includes and transmits a paging cause in a NAS message for every Internet protocol multimedia subsystem (IMS) protocol data unit (PDU) in a wireless communication system.

The present disclosure may provide a method and device for performing paging in a radio resource control (RRC)-inactive state in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method for providing paging to a terminal supporting Multi-SIM in a wireless communication system may include providing a service to the terminal based on a first SIM, detecting occurrence of a voice service based on a second SIM of the terminal, delivering paging with a paging cause to the terminal, and providing the voice service based on the second SIM after switching the terminal from the first SIM to the second SIM.

In addition, as an example of the present disclosure, a network for providing paging to a terminal supporting Multi-SIM in a wireless communication system may include at least one transceiver, at least one processor, and at least one memory coupled operably with the at least one processor and storing instructions that, when executed, cause the at least one processor to perform a specific operation, and the specific operation may be configured to provide a service to the terminal based on a first SIM, to detect occurrence of a voice service based on a second SIM of the terminal, to deliver paging with a paging cause to the terminal, and to provide the voice service based on the second SIM after switching the terminal from the first SIM to the second SIM.

In addition, as an example of the present disclosure, a method for receiving paging by a terminal in a wireless communication system may include receiving, by the terminal, a service from a network based on a first SIM, receiving by the terminal paging with a paging cause from the network, and receiving a voice service based on a second SIM after switching from the first SIM to the second SIM, and the network may deliver the paging with the paging cause to the terminal, when detecting occurrence of the voice service based on the second SIM of the terminal.

In addition, as an example of the present disclosure, a terminal for receiving paging in a wireless communication system may include at least one transceiver, at least one processor, and at least one memory coupled operably with the at least one processor and storing instructions that, when executed, cause the at least one processor to perform a specific operation, the specific operation may be configured to receive a service from a network based on a first SIM, to receive paging with a paging cause from the network through the transceiver, and to receive a voice service based on a second SIM after switching the first SIM to the second SIM, and the network may deliver the paging with the paging cause to the terminal, when detecting occurrence of the voice service based on the second SIM of the terminal.

In addition, as an example of the present disclosure, a device may include at least one memory and at least one processor coupled functionally with the at least one memory, and the at least one processor may control the device to provide a service to a terminal based on a first SIM, to detect occurrence of a voice service based on a second SIM of the terminal, to deliver paging with a paging cause to the terminal, and to provide the voice service based on the second SIM after switching the terminal from the first SIM to the second SIM.

In addition, as an example of the present disclosure, a non-transitory computer-readable medium storing at least one instruction may include the at least one instruction that is executable by a processor, and the at least one instruction may instruct a device to provide a service to a terminal based on a first SIM, to detect occurrence of a voice service based on a second SIM of the terminal, to deliver paging with a paging cause to the terminal, and to provide the voice service based on the second SIM after switching the terminal from the first SIM to the second SIM.

The following may commonly apply.

As an example of the present disclosure, an access and mobility management function (AMF) may receive voice service indication information indicating a voice service occurring based on a second SIM of a terminal and a non-access stratum (NAS) message transmission request from a session management function (SMF) and deliver paging with a paging cause indicating the voice service based on the voice service indication information to the terminal through a radio access network (RAN).

In addition, as an example of the present disclosure, a session initiation protocol (SIP) message for a voice service occurring based on a second SIM may be transmitted from a serving-call session control function (S-CSCF) to a proxy call state control function (P-CSCF), and based on failure of transmission of the SIP message, P-CSCF failure may be detected so that a P-CSCF restoration procedure may be performed.

In addition, as an example, in case a P-CSCF restoration procedure is performed, an AMF may receive voice service indication information and an NAS message transmission request from an SMF.

In addition, as an example of the present disclosure, voice service indication information may be set based on a paging policy indicator (PPI) value.

In addition, as an example, in case SIP message transmission is successful, a P-CSCF may indicate a voice service based on a second SIM to an SMF through a user plane function (UPF), and the SMF may indicate the voice service based on the second SIM by delivering information indicating a user plane setup and a PPI value to an AMF.

In addition, as an example of the present disclosure, in case an AMF transmits a NAS message for an Internet protocol multimedia subsystem (IMS) protocol data unit (PDU), a paging cause may be transmitted with the NAS message.

In addition, as an example of the present disclosure, an AMF may transmit a paging cause with a NAS message, irrespective of whether or not voice service indication information is received from an SMF.

In addition, as an example of the present disclosure, in case a terminal is in a radio resource control (RRC)-inactive state, an AMF may deliver a NAS message with paging cause transmission request information to a RAN.

In addition, as an example of the present disclosure, a NAS message may include a paging cause, and an AMF may deliver paging cause transmission request information to a RAN through an NAS message.

In addition, as an example of the present disclosure, an AMF may deliver paging cause transmission request information to a RAN based on a RAN paging priority information element.

### Advantageous Effects

As is apparent from the above description, the embodiments of the present disclosure have the following effects. The present disclosure may provide a method for operating a terminal and a network in a wireless communication system.

The present disclosure may provide a method and device in which a network delivers paging including a paging cause based on a voice service to a terminal supporting Multi-SIM in a wireless communication system.

The present disclosure may provide a method for indicating a voice service while transmitting a NAS message for a P-CSCF restoration procedure in a wireless communication system.

The present disclosure may provide a method in which an AMF includes and transmits a paging cause in every NAS message for an IMS PDU in a wireless communication system.

The present disclosure may provide a method for performing paging in a RRC-inactive state in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a view showing a method for performing a P-CSCF address list update procedure in case of P-CSCF failure according to an embodiment of the present disclosure.
FIG. 11 is a view showing a method for performing a PDU session release procedure with instruction of reactivation according to an embodiment of the present disclosure.
FIG. 12 is a view showing a method for detecting P-CSCF failure according to an embodiment of the present disclosure.
FIG. 13 may perform a P-CSCF restoration procedure according to an embodiment of the present disclosure.
FIG. 14 is a view showing a method for triggering a P-CSCF restoration procedure through an AMF according to an embodiment of the present disclosure.
FIG. 15 is a view showing a method for performing a P-CSCF restoration procedure based on a PCF according to an embodiment of the present disclosure.
FIG. 16 is a flowchart showing a method for performing a P-CSCF restoration procedure considering a terminal supporting Multi-SIM according to an embodiment of the present disclosure.
FIG. 17 is a flowchart showing a method for performing a P-CSCF restoration procedure considering a terminal supporting Multi-SIM according to an embodiment of the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/5GS

3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

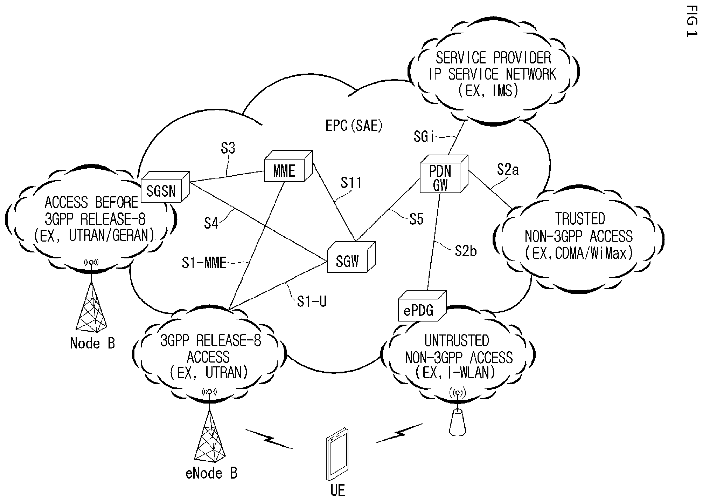

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

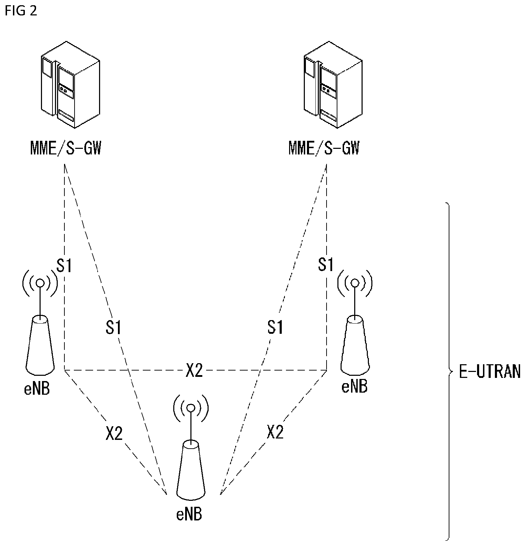

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

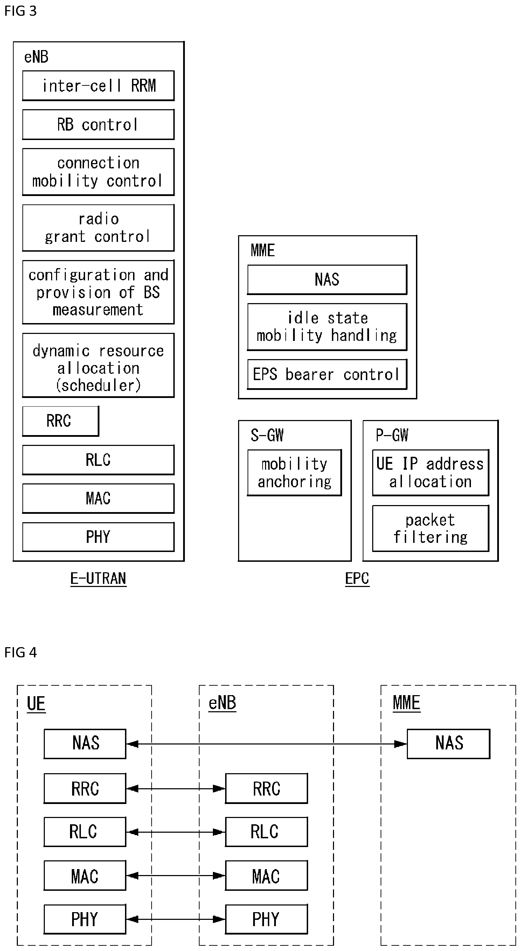

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

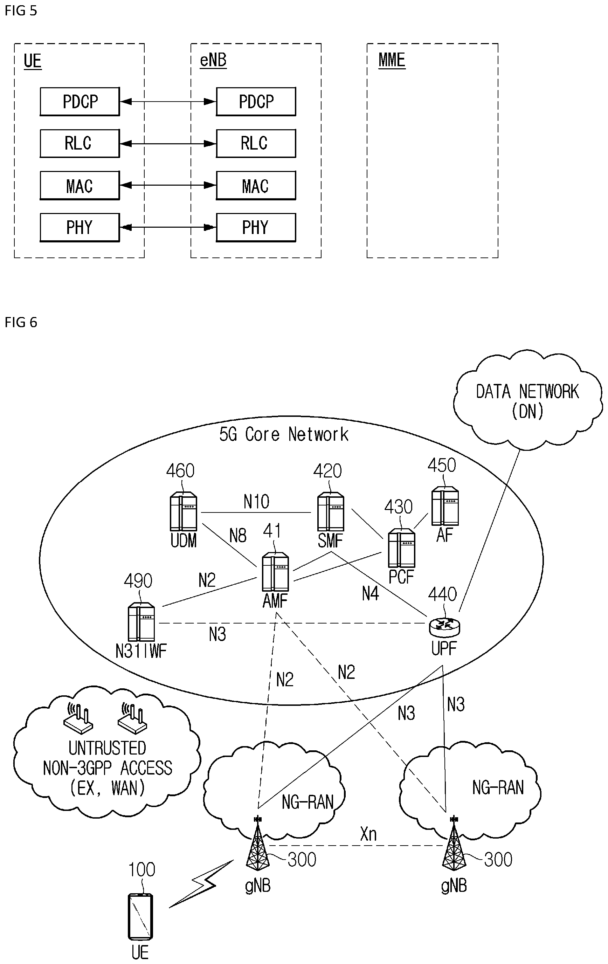

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

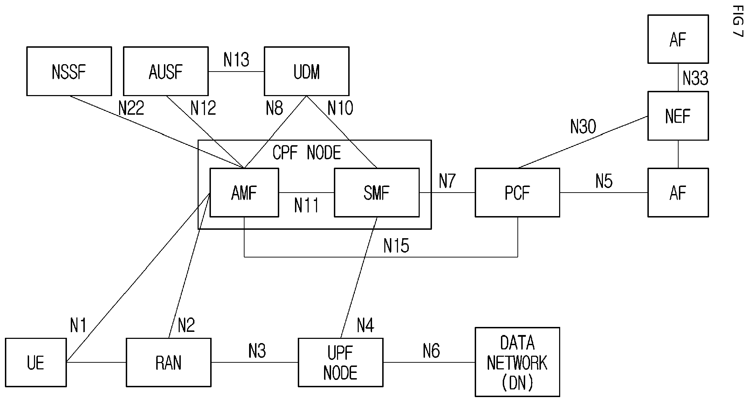

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

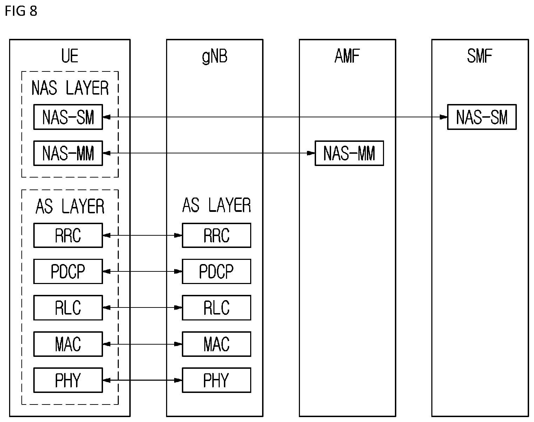

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

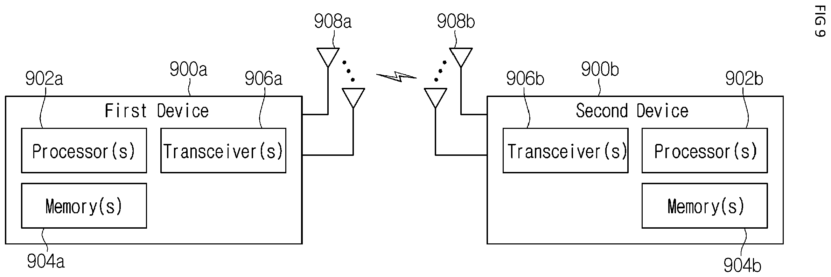

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

As an example, multi-subscriber identification module (MU-SIM) may be supported for a terminal. Because there are a large number of mobile communication service providers providing voice and data and each of them shows its strength in a different area, Multi-SIM may be supported for a terminal. As a concrete example, a SIM card for voice communication and a SIM card for data communication may be separated, and thus a plurality of SIM cards may be mounted in a terminal to which a service may be provided. As another example, in case each service provider provides a service in a different region, the service may be provided more flexibly through a Multi-SIM terminal. Herein, an LTE system and an NR system may support a lot of frequency bands. However, as most terminals may have one access point (AP) based on one modem, there may be a functional limitation. As an example, each terminal may support only a frequency band appropriate for a region where the terminal is released. In case supporting a plurality of frequency bands is considered for a terminal, a size of the terminal may increase and a plurality of modems may be needed, thereby raising a price of the terminal.

In consideration of what is described above, using a "dual sim dual standby" terminal may be considered. That is, a terminal may share a single modem and operate by switching between systems corresponding to respective SIM cards. That is, a terminal may support a Multi-SIM operation that supports a plurality of SIM cards simultaneously, and hereinafter will be described an operation of a terminal supporting a Multi-SIM operation.

In addition, as an example, in case a terminal is provided with an IP multimedia subsystem (IMS) through a core network (e.g. 5GC), the terminal may perform a registration procedure for an IMS service and a PDU session establishment procedure. As another example, a terminal may be automatically allocated an IP address and other parameters dynamically based on a dynamic host configuration protocol (DHCP) procedure.

Herein, a terminal may select a proxy call state control function (P-CSCF) through either the PDU session establishment procedure or the DHCP procedure and perform initial IMS registration.

That is, the terminal may select a P-CSCF while accessing an IMS for an IMS service. A P-CSCF may serve as a proxy or a user agent. In addition, as an example, a P-CSCF may perform permission of a bearer resource and QoS management through interaction with a policy decision function (PDF) or a policy control function (PCF) that controls a QoS policy. Herein, as an example, P-CSCF failure may occur when a session initiation protocol (SIP) procedure starts or ends. In case P-CSCF failure occurs, various procedures for P-CSCF restoration may be performed, and this will be described below.

As an example, a P-CSCF restoration procedure may be triggered based on at least any one of an AMF, an SMF, a UDM, and a PCF. In addition, as an example, various mechanisms for a P-CSCF restoration procedure may trigger an operation of a terminal for selecting a P-CSCF again.

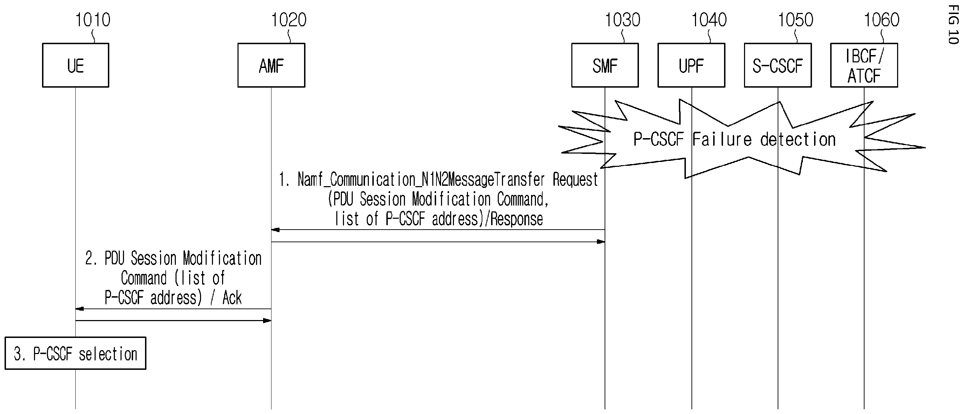

As a concrete example, FIG. 10 is a view showing a method for performing a P-CSCF address list update procedure in case of P-CSCF failure according to an embodiment of the present disclosure. Referring to FIG. 10, P-CSCF failure may occur. Herein, when a P-CSCF search is performed based on P-CSCF failure, the P-CSCF search may be performed according to a request and provisioning of a P-CSCF address in extended protocol configuration options (ePCO). As an example, an AMF 1020 may obtain information including a PDU session modification command and a P-CSCF address list from an SMF 1030 and deliver the information to a terminal 1010. In case P-CSCF failure occurs, the SMF 1030 may recognize the P-CSCF failure through another network function (e.g. AMF, UDM, etc) and perform a PDU session update procedure. Thus, the SMF 1030 may deliver a new P-CSCF list to the terminal. As another example, a P-CSCF search procedure may be performed based on a DHCP method but is not limited to a specific embodiment.

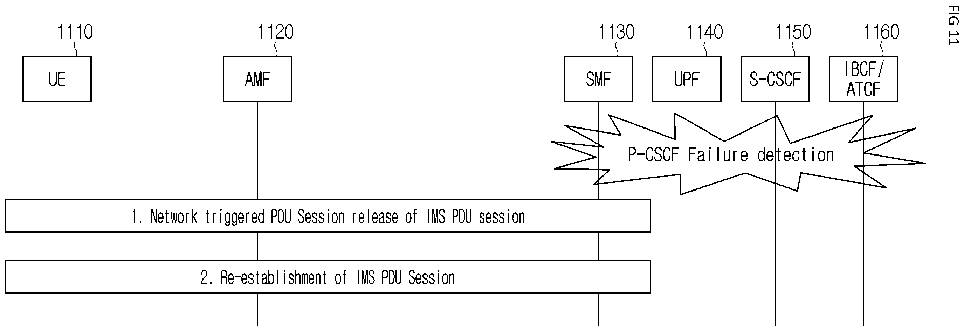

FIG. 11 is a view showing a method for performing a PDU session release procedure with instruction of reactivation according to an embodiment of the present disclosure. As an example, as described above, in case P-CSCF failure occurs, the SMF 1030 may recognize the P-CSCF failure through another network function (e.g. AMF, UDM, etc) and perform a PDU session release procedure with instruction of reactivation. Herein, in case an IMS PDU session release procedure is performed, a terminal 1110 may perform an IMS PDU session reestablishment procedure. The terminal 1110 may perform a P-CSCF search procedure to perform an SIP registration in an IMS PDU session establishment procedure or a DHCP procedure. Then, the terminal 1110 may reselect a searched P-CSCF.

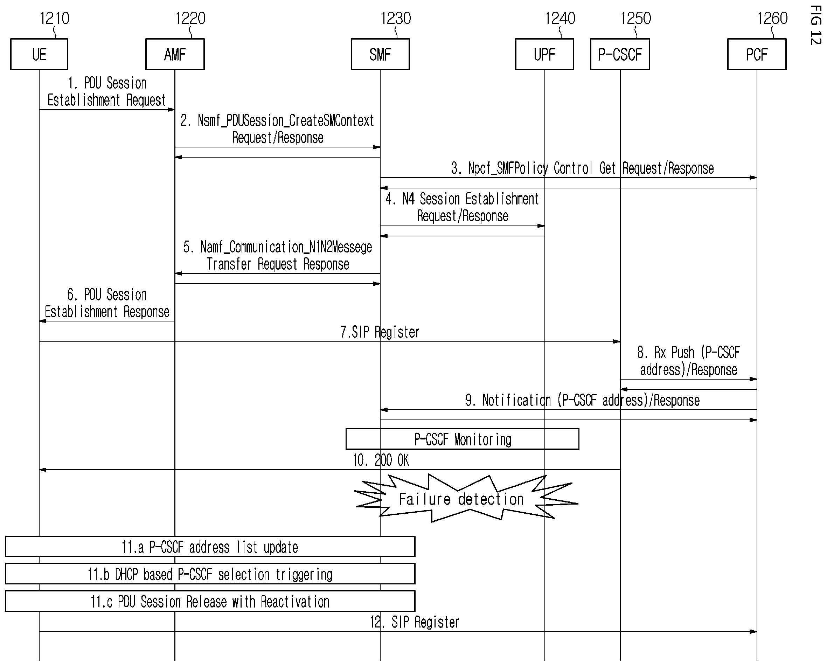

FIG. 12 is a view showing a method for detecting P-CSCF failure according to an embodiment of the present disclosure. Referring to FIG. 12, an SMF 1230 may perform P-CSCF monitoring and detect P-CSCF failure. More specifically, a terminal 1210 may transmit a PDU session establishment request for establishing a PDU session for an IMS service to an AMF 1220. The AMF 1220 may generate a context message (e.g. Nsmf_PDUSession_CreateSMContext) for a PDU session to establish the PDU session for an IMS service and deliver the context message to the SMF 1230. Next, based on the context message obtained from the AMF 1220, the SMF 1230 may deliver a message (e.g. Npcf_SMPolicyControl_Create) to a PCF 1260 in order to obtain session-related policy information and receive a corresponding message. Next, based on the message obtained from the PCF 1260, the SMF 1230 may select a UPF 1240 for the IMS service, transmit a request message for establishing a session (e.g. N4 session) with the UPF 1240, and then receive a corresponding response. Next, in case a PDU session is established, the SMF 1230 may transmit a message (e.g. Namf_Communication_N1N2MessageTransfer) for notifying a PDU session establishment request to the AMF 1220 and then receive a corresponding response. The AMF 1220 may transmit a PDU session establishment response message to the terminal 1210. Herein, the AMF 1220 may deliver P-CSCF address list information to the terminal 1210 together. Next, the terminal 1210 may perform initial registration to a P-CSCF 1250 based on a received P-CSCF address list. Herein, the P-CSCF 1250 may transmit a message (e.g. Rx Push) for notifying selection of the P-CSCF 1250 by the terminal to the PCF 1260 and then receive a corresponding response. Next, the PCF 1260 may transmit a P-CSCF address to the SMF 1230 and receive a corresponding response. Next, P-CSCF monitoring may be performed. Herein, based on the P-CSCF monitoring, P-CSCF failure may be detected in at least one or more of the SMF 1230 and the UPF 1240. As an example, the P-CSCF failure is detected, the SMF 1230 may start a P-CSCF address list update procedure in order to enable the terminal to perform a P-CSCF reselection procedure. As another example, the SMF 1230 may start a DHCP procedure based on a P-CSCF selection triggering procedure in order to enable the terminal to perform the P-CSCF reselection procedure. As another example, the SMF 1230 may perform a PDU session release procedure as well as a reactivation procedure in order to enable the terminal to trigger IMS PDU session reestablishment, and this is the same as described above. Next, the terminal 1210 may perform an IMS registration procedure with a new P-CSCF.

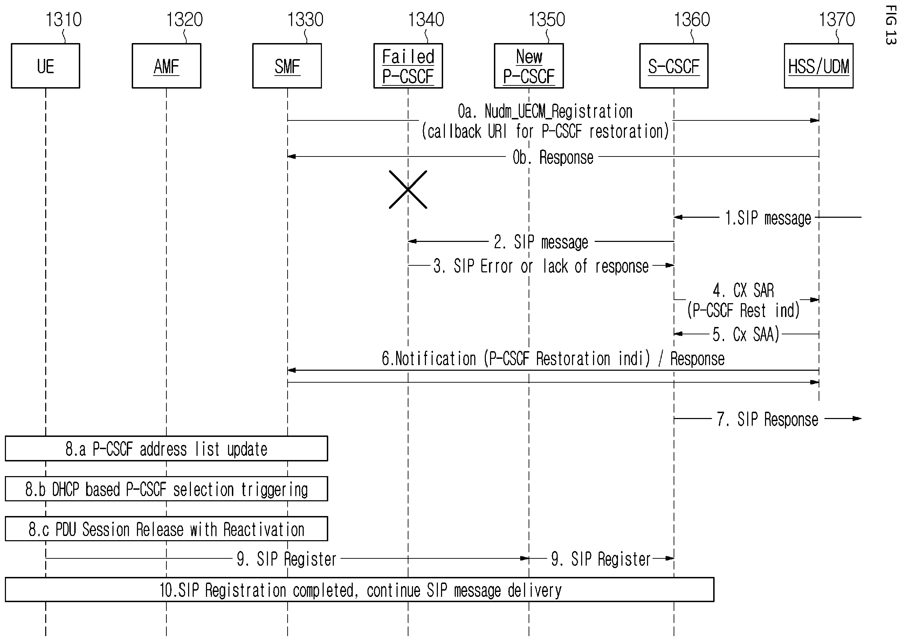

As another example, FIG. 13 may perform a P-CSCF restoration procedure according to an embodiment of the present disclosure. Referring to FIG. 13, in case an SMF 1330 serving an IMS PDU session registered in a UDM 1370 supports a P-CSCF restoration mechanism based on the UDM, the SMF 1330 may indicate a callback URI for P-CSCF restoration to the UDM 1370 through a message and receive a corresponding response. A serving-call session control function (S-CSCF) 1360 may receive an entering SIP message. Herein, in case the S-CSCF 1360 detects previous P-CSCF failure, the S-CSCF 1360 may transmit a message (e.g. Cx SAR) for indicating an instruction of P-CSCF restoration to an HSS 1370. Next, in case the S-CSCF 1360 receives a corresponding response message (e.g. Cx SAA), an HSS may deliver the instruction of P-CSCF restoration to the UDM and indicate it to the SMF 1330. Next, the S-CSCF 1350 may deliver an SIP response. As an example, in case P-CSCF failure is detected, the SMF 1330 may start a P-CSCF address list update procedure in order to enable a terminal to perform a P-CSCF reselection procedure. As another example, the SMF 1330 may start a DHCP procedure based on a P-CSCF selection triggering procedure in order to enable the terminal to perform the P-CSCF reselection procedure. As another example, the SMF 1330 may perform a PDU session release procedure as well as a reactivation procedure in order to enable the terminal to trigger IMS PDU session reestablishment, and this is the same as described above. Next, the terminal 1310 may perform an IMS registration procedure with a new P-CSCF.

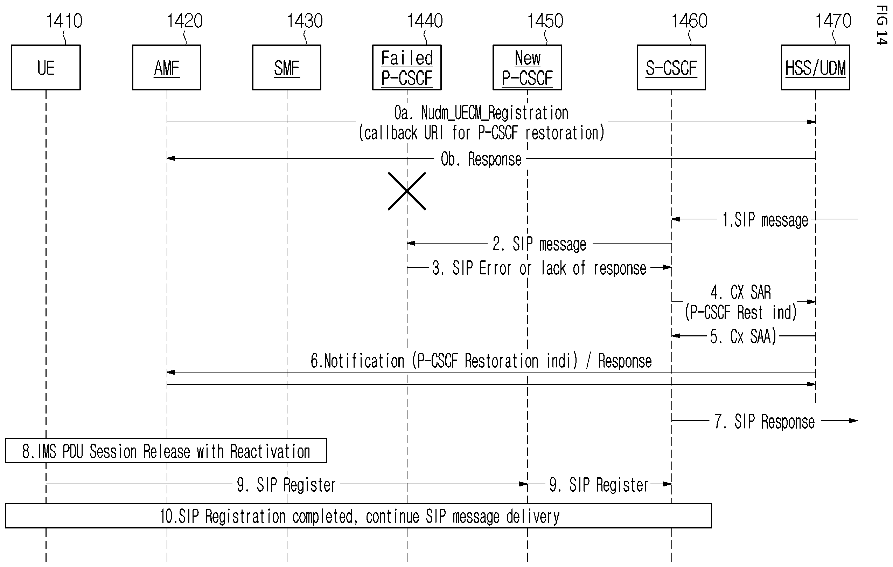

FIG. 14 is a view showing a method for triggering a P-CSCF restoration procedure through an AMF according to an embodiment of the present disclosure. Referring to FIG. 14, in case an AMF 1420 serving a terminal registered in a UDM 1470 supports a UDM-based P-CSCF restoration mechanism, the AMF 1420 may indicate a callback URI for P-CSCF restoration to the UDM 1470 through a message and receive a corresponding response. An S-CSCF 1460 may receive an entering SIP message. Herein, in case the S-CSCF 1460 detects previous P-CSCF failure, the S-CSCF 1460 may transmit a message (e.g. Cx SAR) for indicating an instruction of P-CSCF restoration to an HSS 1470. Next, in case the S-CSCF 1460 receives a corresponding response message (e.g. Cx SAA), an HSS may deliver the instruction of P-CSCF restoration to the UDM and indicate it to the AMF 1420. Next, the S-CSCF 1450 may deliver an SIP response. As an example, in case P-CSCF failure is detected, the AMF 1430 may perform a PDU session release procedure as well as a reactivation procedure in order to enable the terminal to trigger IMS PDU session reestablishment. Next, the terminal 1410 may perform an IMS registration procedure with a new P-CSCF.

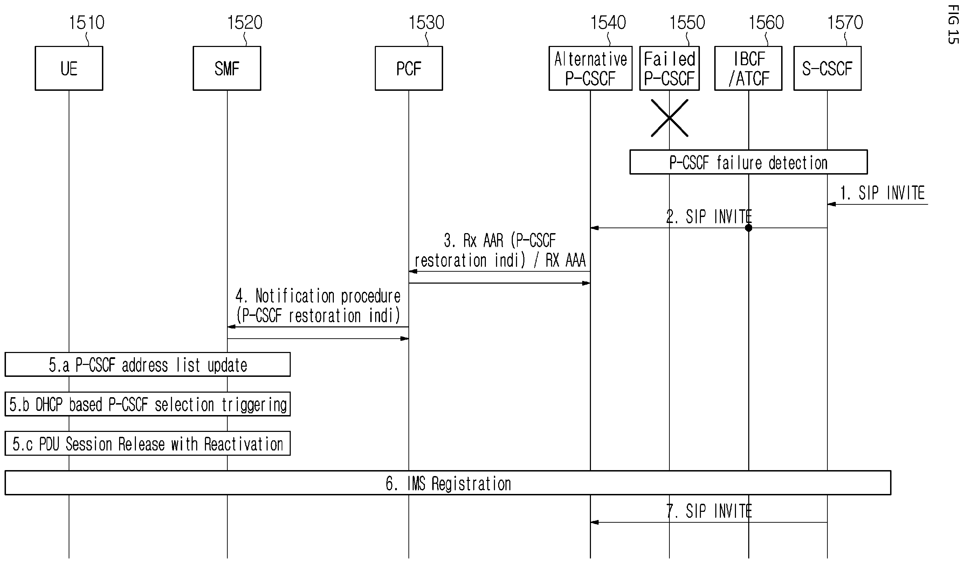

FIG. 15 is a view showing a method for performing a P-CSCF restoration procedure based on a PCF according to an embodiment of the present disclosure. Referring to FIG. 15, a P-CSCF restoration procedure based on a PCF may be performed. As an example, P-CSCF failure may be detected based on at least any one of an S-CSCF 1570, an interconnection border control function (IBCF) 1560, and an access transfer control function (ATCF) 1570. Herein, in case the S-CSCF 1570 receives an SIP message (e.g. SIP INVITE) and detects failure of a previous P-CSCF 1550, the S-CSCF 1570 may the SIP message to a new P-CSCF 1540, and the new P-CSCF 1540 may be determined based on a local configuration. Next, the new P-CSCF 1530 may deliver a message including an instruction of P-CSCF restoration to a relevant PCF 1530 and receive a response. Next, the PCF 1530 may deliver the instruction of P-CSCF restoration to an SMF 1520 serving an IMS PDU session. As an example, in case P-CSCF failure is detected, the SMF 1520 may start a P-CSCF address list update procedure in order to enable a terminal to perform a P-CSCF reselection procedure. As another example, the SMF 1520 may start DHCP based on a P-CSCF selection triggering procedure in order to enable the terminal to perform the P-CSCF reselection procedure. As another example, the SMF 1520 may perform a PDU session release procedure as well as a reactivation procedure in order to enable the terminal to trigger IMS PDU session reestablishment, and this is the same as described above. Next, the terminal 1510 may perform an IMS registration procedure with a new P-CSCF.

In addition, as an example, in order to reduce power consumption, a terminal may perform discontinuous reception (DRX) in a RRC idle (RRC_IDLE) and RRC inactive (RRC_inactive) state. The terminal monitors one paging occasion (PO) in each DRX cycle. The terminal may receive paging downlink control information (DCI) on a paging occasion (PO) which is a PDCCH monitoring occasion that may be configured in a multi-time slot (e.g. subframe or OFDM symbol).

In addition, as an example, in NR, a base station may perform multiple beam transmissions. The base station may transmit a same paging message repeatedly in every beam of an overall pattern. A terminal may receive the paging message by selecting a specific beam among the beams transmitted by the base station, and a corresponding operation of the terminal may be different according to an implementation of the terminal.

In addition, as an example, a paging message may be distinguished into radio access network (RAN) paging and core network (CN) paging. However, a RAN paging message and a CN paging message may be an identical paging message. More specifically, the RRC idle state terminal and the RRC inactive state terminal, which are described above, may operate differently. As an example, the RRC inactive state terminal is connected to a CN and may have an inactive state in a RAN. Accordingly, the CN may determine that the terminal is connected to a specific RAN. Herein, in case signaling occurs to the terminal, the CN may consider the terminal to be in a connected state and deliver the signaling for the terminal to the RAN. Herein, because the RRC inactive state terminal has an inactive state in the RAN, the RAN may generate a paging message and perform the above-described RAN paging.

On the other hand, the RRC idle state terminal may be in an inactive state both for a RAN and for a CN. Accordingly, in case signaling occurs to the terminal, the CN may perform the above-described CN paging based on a tracking area (TA).

Herein, as an example, the RRC inactive state terminal receives RAN paging, the terminal may perform a RRC connection resume procedure. On the other hand, in case the RRC inactive state terminal receives CN paging, the terminal switches from the RRC inactive state to the RRC idle state and provides information on a switched state to the CN.

In addition, as an example, when a terminal receives a paging message, the terminal may identify DCI scrambled with a radio network temporary identifier (P-RNTI) in a discontinuous PDCCH based on DRX and may operate based on this. Herein, a frame in which the terminal monitors the PDCCH may be the above-described paging frame (PF), and a PDCCH monitoring occasion may be a paging occasion (PO), which is the same as described above.

Based on what is described above, a terminal may receive a paging message. Herein, terminals supporting the above-described multi-subscriber identification module (MU-SIM) may be used. As there are a large number of mobile communication service providers providing voice and data, if each of them shows its strength in a different area, using Multi-SIM may be considered. As an example, a SIM card for voice communication and a SIM card for data communication may be separated so that a plurality of SIM cards may be mounted in a terminal and a service may be provided, and this is the same as described above.

As an example, a mobile terminated (MT) service may occur to a terminal supporting Multi-SIM. Herein, in case the MT service is a voice service, a paging message may be paged to the terminal with an indication of the voice service being added thereto. Specifically, in case a terminal receives a paging indicating a voice service from a second SIM network while using a service (e.g. Internet) through a first SIM, the terminal may recognize that an MT service is the voice service. The terminal may stop the service using the first SIM to receive the voice service of the second SIM and receive the voice service by providing a paging response through the second SIM.

Herein, as an example, a network may recognize that an MT service is a voice service, through a paging policy indicator (PPI) value.

More specifically, based on a voice service, a P-CSCF may mark a differentiated services code point (DSCP) on a session initiation protocol (SIP) for the voice service. Next, a UPF may deliver specific DSCP marking information to an SMF. The SMF may determine whether or not there is a voice service, based on at least any one of the DSCP marking information, a data network name (DNN), and QoS flow information. In case the SMF determines that there is a voice service, the SMF may indicate necessity of a user plane setup to an AMF through a specific PPI value. The AMF may recognize the voice service based on the PPI value delivered from the SMF and make a paging request to a RAN. That is, the AMF may recognize the voice service based on the PPI value. Herein, the paging request may include a paging cause value indicating the voice service. Next, when paging to a terminal, the RAN may transmit the above-described paging cause together so that the terminal may recognize that a paging request based on the voice service has arrived. Herein, in case the terminal is in a RRC-inactive state, the RAN may recognize the voice service based on the PPI value, which the UDF marks on a header of a downlink PDU, and 5QI and ARP of a QoS flow receiving the PDU and deliver the paging request including the paging cause to the terminal. For what is described above, the SMF may deliver a rule (e.g. N4 rule) for PPI marking to the UPF but is not limited to a specific embodiment.

In addition, as an example, it is possible to consider a case where P-CSCF failure occurs during an IMS service. As a concrete example, in case an MT call occurs to a terminal, a S-CSCF may transmit an SIP message to a P-CSCF to indicate the MT call. However, in case SIP message transmission failure occurs, the S-CSCF may determine the occurrence of P-CSCF failure, and a P-CSCF restoration procedure may be performed.

As an example, the S-CSCF may indicate necessity of P-CSCF restoration to an SMF through an HSS/UDM or a PCF. In order to transmit information on a new P-CSCF address to the terminal, the SMF may include and transmit the information on the new P-CSCF address in a PCO, while performing a PDU session modification procedure. The terminal may receive the above-described information and perform an IMS registration procedure with a new P-CSCF again. In case the terminal completes the IMS registration, the S-CSFS may transmit an SIP message through the new P-CSCF, and thus an MT call may be normally performed.

As another example, a P-CSCF restoration procedure may be a method of generating a PDU session again after releasing the PDU session. An SMF may transmit a new P-CSCF by including the new P-CSCF in a PCO of a PDU session establishment accept message. A terminal may perform IMS registration again through the new P-CSCF based on the new generated PDU session. In case the IMS registration of the terminal is completed, an S-CSCF may transmit an SIP message so that an MT call may be made.

Herein, in the case of a terminal supporting Multi-SIM, as described above, it is possible to consider a case where paging occurs after an SMF transmits a PDU session modification command or a PDU session release command for P-CSCF restoration. At this time, the paging may not include a paging cause that notifies a voice service, and the terminal may not recognize an MT call. Accordingly, the terminal may not transmit a paging response on the ground that there is no voice service, and in the above-described situation, there may be a problem in that the terminal does not receive the MT call, to which a solution will be described below.

As a concrete example, in case a voice service occurs to a second SIM while a terminal receives a service through a first SIM, a paging message may include a paging cause indicating the voice service, and this is the same as described above. Herein, in case a UPF searches for an SIP message for an IMS based on the voice service, the UPF may indicate the presence of downlink data to an SMF. Herein, the SMF may set a PPI value while transmitting a request message for a user plane setup to an AMF, and thus the AMF may also recognize the voice service. The AMF may indicate a paging operation including the paging cause indicating the voice service to a RAN, and the RAN may transmit a paging message including the paging cause to the terminal, which is the same as described above.

However, in a P-CSCF restoration procedure, SIP signaling for a voice service may not be searched in a UPF. As an example, in case of failure of transmission of an SIP message for a voice service to a P-CSCF that an S-CSCF stores in an IMS registration procedure, the S-CSCF may determine the occurrence of P-CSCF failure, and a P-CSCF restoration procedure may be performed. Herein, an SMF may perform the P-CSCF restoration procedure through an HSS/UDM or a PCF, and this is the same as described above.

Herein, in case, through a UPF based on an SIP for a voice service, the SMF receives indication that there is downlink data, the SMF may transmit a request message for user plane setup to an AMF, but SMF signaling transmitted in the above-described P-SCSF restoration procedure may be a NAS message, and there may be a problem in that the AMF does not recognize the voice service. As an example, in consideration of what is described above, hereinafter will be described a method for indicating a voice service in a P-CSCF restoration procedure.

As an example, an SMF may indicate a voice service with a request for NAS message transmission for P-CSCF restoration. When requesting an AMF to transmit a NAS message for P-CSCF restoration, the SMF may deliver information indicating the voice service together. That is, the SMF may indicate the voice service while requesting the AMF to transmit the NAS message. As an example, the NAS message transmitted by the AMF may be a PDU session modification command or a PDU session release command but may not be limited thereto.

Herein, the voice service may be indicated through a PPI value. Specifically, in case a UPF searches for an SIP message for an IMS based on the voice service, the UPF may indicate presence of downlink data to the SMF. Herein, the SMF may set the PPI value when transmitting a request message for user plane setup to the AMF, and thus the AMF may also recognize the voice service, which is the same as described above. Herein, as an example, in case P-CSCF restoration is needed, the SMF may deliver the PPI value together when requesting transmission of a NAS message. The AMF may configure a paging cause based on the PPI value received from the SMF and request paging to a RAN. Next, the RAN may transmit the paging cause together while performing paging for a terminal. The terminal may recognize the voice service by receiving paging including the paging cause. As an example, as described above, the terminal may be a terminal supporting Multi-SIM, and this is the same as described above.

Herein, the terminal may recognize the voice service through the paging cause of a paging message, perform a procedure for P-CSCF restoration based on a received NAS message, and then receive an MT call.

As another example, an SMF may indicate to an AMF that a NAS message is associated with a voice service, not by using a PPI value but through an individual indication. Herein, a separate indicator may indicate the voice service, irrespective of a paging policy. That is, the SMF may indicate the voice service as a paging cause to the AMF, irrespective of a paging policy for the NAS message.

As a concrete example, in case an SMF uses a PPI value, an AMF may apply a paging policy for an MT voice call, because the AMF applies a paging policy according to a PPI.

Herein, as an example, it is possible to consider a case where another paging policy is applied to a NAS message. Accordingly, there may be a limitation on indicating a voice service through a PPI value, and a separate indicator may be needed. That is, through the separate indicator indicating the voice service, it may be indicated to the AMF that the NAS message is associated with the voice service. Then, the AMF may deliver paging including a paging cause indicating the voice service to a RAN, and the RAN may transmit a paging message including the paging cause to a terminal.

As another example, an AMF may recognize, based on an indication of a voice service, that a P-CSCF restoration procedure is needed, and perform an operation based on this.

As another example, an AMF may include a paging cause in every NAS message for an IMS PDU. That is, when transmitting a NAS message based on signaling for the IMS PDU, the AMF may transmit the NAS message by including a paging cause indicating a voice service in the NAS message. Herein, in case an SMF delivers a request for transmission of the NAS message for P-CSCF restoration to the AMF, the SMF may not provide separate information. That is, the AMF may include the paging cause indicating the voice service in every NAS message generated based on an IMS PDU session and transmit the NAS message. That is, in case paging is needed, the AMF may include the paging cause in every NAS message generated in a PDU session using an IMS DNN and request paging to a RAN. Thus, the SMF may not deliver any separate indication to the AMF. In addition, as an example, based on what is described above, a separate paging policy may be applied for a NAS message. However, even when a NAS message is not a message for P-CSCF restoration, a paging cause may be included. As an example, in case an SMF modifies QoS for an IMS PDU session so that no MT call occurs, a paging cause may be delivered to a terminal. However, the SMF makes no separate determination, a voice service may be indicated through an operation of an AMF.

As another example, a method for supporting a RRC-inactive state may be considered. As an example, in a RRC-inactive state, paging may be performed in a RAN. Herein, the RAN may not recognize whether or not a NAS message is associated with a PDU session. Accordingly, in order to support P-CSCF restoration even in the RRC-inactive state, an AMF may have to transmit separate information indicating transmission of a paging cause while transmitting a NAS message to the RAN. As an example, an AMF may recognize that a paging cause indicating a voice service is included, based on a PPI value or a separate indicator transmitted from an SMF. As another example, an AMF may include a paging cause in every NAS message transmission request based on an IMS PDU, and this is the same as described above. Herein, as an example, the AMF may transmit a NAS message including a paging cause to a RAN. In case the RAN receives the NAS message including the paging cause from the AMF, the RAN may transmit the paging cause with paging when paging is needed. As another example, an AMF may include a specific value in a RAN paging priority information element (IE) and transmit it to a RAN.

As an example, a specific value of a RAN paging priority IE may be a value indicating transmission of a paging cause. Herein, the specific value of the RAN paging priority IE may be a value indicating a voice service but is not limited to a specific embodiment.

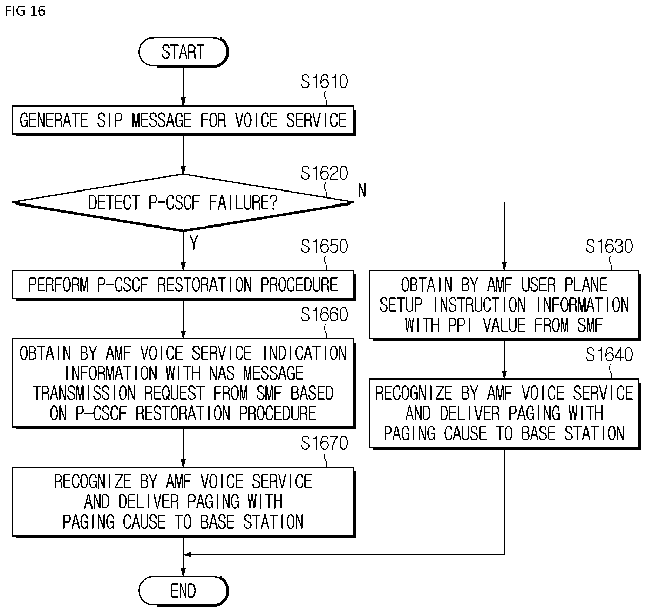

FIG. 16 is a view showing a method for performing a P-CSCF restoration procedure considering a terminal supporting Multi-SIM according to an embodiment of the present disclosure.

A terminal supporting Multi-SIM may be provided with a service based on a first SIM. Herein, as an example, a voice service may occur based on a second SIM of Multi-SIM that the terminal supports. At this time, an SIP message for the voice service may be generated (S1610), and an S-CSCF may transmit the SIP message for the voice service to a P-CSCF. Herein, in case the transmission of the SIP message for the voice service fails, P-CSCF failure may be detected (S 1620). As an example, in case P-CSCF failure is not detected but the P-CSCF receives the SIP message for the voice service from the S-CSCF, an SMF may receive an indication based on a UPF that there is downlink data and may deliver a request for user plane setup and a PPI value to an AMF. That is, the AMF may obtain user plane setup instruction information with the PPI value from the SMF (S1630). Herein, the AMF may recognize the voice service based on the PPI value and deliver paging with a paging cause to a base station (S 1640). Herein, the paging cause may indicate the voice service. Next, the base station may transmit a paging message with the paging cause to the terminal, and the terminal may switch to the second SIM based on the paging message and be provided with the voice service.

On the other hand, in case the S-CSCF fails SIP message transmission to the P-CSCF and detects P-CSCF failure (S1620), a P-CSCF restoration procedure may be performed (S 1650). Herein, in the P-CSCF restoration procedure, SIP signaling for the voice service may not be searched in the UPF. As an example, the SMF may perform the P-CSCF restoration procedure through an HSS/UDM or a PCF, and this is the same as described above. Herein, based on an SIP message for the voice service, the SMF may deliver voice service indication information with a NAS message transmission request to the AMF (S1660). As an example, the voice service indication information may be information indicated based on the above-described PPI value. As another example, the voice service indication information may be separate indication information, which is not a PPI value, and is not limited to the above-described embodiment. Next, the AMF may recognize the voice service and deliver paging with a paging cause to the base station (S1670). Herein, the paging cause may indicate the voice service. Next, the base station may transmit a paging message with the paging cause to the terminal, and the terminal may switch to the second SIM based on the paging message and be provided with the voice service.

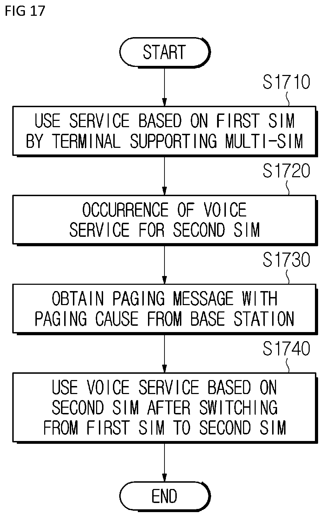

FIG. 17 is a view showing a method for performing a P-CSCF restoration procedure considering a terminal supporting Multi-SIM according to an embodiment of the present disclosure.

Referring to FIG. 17, a terminal supporting Multi-SIM may use a service based on a first SIM (S1710). That is, the terminal may be provided with a service based on the first SIM. Herein, in case a voice service for a second SIM occurs (S1720), the terminal may obtain a paging message with a paging cause from a base station (S1730). Herein, the paging cause may be information indicating the voice service. Next, the terminal may switch from the first SIM to the second SIM and be provided with the voice service based on the second SIM (S 1740).

Herein, as an example, a terminal may receive a paging message indicating a voice service based on a P-CSCF restoration procedure. Specifically, an SIP message for a voice service may occur based on the voice service occurring to a second SIM. Herein, an S-CSCF may transmit an SIP message for the voice service to a P-CSCF. Herein, in case the transmission of the SIP message for the voice service fails, P-CSCF failure may be detected. As an example, in case P-CSCF failure is not detected and the P-CSCF receives the SIP message for the voice service from the S-CSCF, an SMF may receive, based on a UPF, an indication that there is downlink data, and deliver a request for user plane setup and a PPI value to an AMF. That is, the AMF may obtain user plane setup instruction information with the PPI value from the SMF. Herein, the AMF may recognize the voice service based on the PPI value, and deliver paging with a paging cause to a base station. Herein, the paging cause may indicate the voice service. Next, the terminal may receive a paging message with the paging cause from the base station, switch to the second SIM based on the paging message, and be provided with the voice service.

On the other hand, in case the S-CSCF fails to transmit the SIP message to the P-CSCF and detects P-CSCF failure, a P-CSCF restoration procedure may be performed. Herein, in the P-CSCF restoration procedure, SIP signaling for the voice service may not be searched in a UPF. As an example, the SMF may perform the P-CSCF restoration procedure through an HSS/UDM or a PCF, and this is the same as described above. Herein, based on an SIP message for the voice service, the SMF may deliver voice service indication information with a NAS message transmission request to the AMF. As an example, the voice service indication information may be information indicated based on the above-described PPI value. As another example, the voice service indication information may be separate indication information, which is not a PPI value, and is not limited to the above-described embodiment. Next, the AMF may recognize the voice service and deliver paging with a paging cause to the base station. Herein, the paging cause may indicate the voice service. Next, the terminal may receive a paging message with the paging cause to the base station, switch to the second SIM based on the paging message, and be provided with the voice service.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method for providing paging to a terminal supporting Multi-SIM in a wireless communication system, the method comprising:
providing a service to the terminal based on a first SIM;
detecting occurrence of a voice service based on a second SIM of the terminal;
delivering paging with a paging cause to the terminal; and
providing the voice service based on the second SIM after switching the terminal from the first SIM to the second SIM.

2. The method of claim 1, wherein an access and mobility management function (AMF) receives voice service indication information indicating the voice service occurring based on the second SIM of the terminal and a non-access stratum (NAS) message transmission request from a session management function (SMF) and delivers the paging with a paging cause indicating the voice service based on the voice service indication information to the terminal through a radio access network (RAN).

3. The method of claim 2, wherein a session initiation protocol (SIP) message for the voice service occurring based on the second SIM is transmitted from a serving-call session control function (S-CSCF) to a proxy call state control function (P-CSCF), and
wherein, in case that transmission of the SIP message is failed, a P-CSCF restoration procedure is performed based on detection of P-CSCF failure.

4. The method of claim 3, wherein, in case that the P-CSCF restoration procedure is performed, the AMF receives the voice service indication information and the NAS message transmission request from the SMF.

5. The method of claim 4, wherein the voice service indication information is set based on a paging policy indicator (PPI) value.

6. The method of claim 3, wherein, in case that the transmission of the SIP message is successful, the P-CSCF transmits the SIP message to a user plane function (UPF), the UPF indicates presence of downlink data to the SMF, and the SMF indicates the voice service based on the second SIM by delivering information indicating a user plane setup and a PPI value to the AMF.

7. The method of claim 1, wherein, in case that the AMF transmits a NAS message for an Internet protocol multimedia subsystem (IMS) protocol data unit (PDU), the AMF transmits the paging cause with the NAS message.

8. The method of claim 7, wherein the AMF transmits the paging cause with the NAS message, irrespective of whether or not the voice service indication information is received from the SMF.

9. The method of claim 1, wherein, in case that the terminal is in a radio resource control (RRC)-inactive state, the AMF delivers a NAS message with paging cause transmission request information to the RAN.

10. The method of claim 9, wherein the NAS message includes a paging cause, and wherein the AMF delivers the paging cause transmission request information to the RAN through the NAS message.

11. The method of claim 9, wherein the AMF delivers the paging cause transmission request information to the RAN based on a RAN paging priority information element.

12. A network for providing paging to a terminal supporting Multi-SIM in a wireless communication system, the network comprising:
at least one transceiver;
at least one processor; and
at least one memory coupled operably with the at least one processor and storing instructions that, when executed, cause the at least one processor to perform a specific operation,
wherein the specific operation is configured to:
provide a service to the terminal based on a first SIM,
detect occurrence of a voice service based on a second SIM of the terminal,
deliver paging with a paging cause to the terminal, and
provide the voice service based on the second SIM after switching the terminal from the first SIM to the second SIM.

13. A method for receiving paging by a terminal in a wireless communication system, the method comprising:
receiving, by the terminal, a service from a network based on a first SIM;
receiving, by the terminal, paging with a paging cause from the network; and
receiving a voice service based on a second SIM after switching from the first SIM to the second SIM,
wherein the network delivers the paging with the paging cause to the terminal, based on detecting occurrence of the voice service based on the second SIM of the terminal.

14. A terminal for receiving paging in a wireless communication system, the terminal comprising:
at least one transceiver;
at least one processor; and
at least one memory coupled operably with the at least one processor and storing instructions that, when executed, cause the at least one processor to perform a specific operation,
wherein the specific operation is configured to:
receive a service from a network based on a first SIM,
receive paging with a paging cause from the network through the transceiver, and
receive a voice service based on a second SIM after switching the first SIM to the second SIM, and
wherein the network delivers the paging with the paging cause to the terminal, based on detecting occurrence of the voice service based on the second SIM of the terminal.

15. A device comprising:
at least one memory; and
at least one processor coupled functionally with the at least one memory,
wherein the at least one processor controls the device to:
provide a service to a terminal based on a first SIM,
detect occurrence of a voice service based on a second SIM of the terminal,
deliver paging with a paging cause to the terminal, and
provide the voice service based on the second SIM after switching the terminal from the first SIM to the second SIM.

16. A non-transitory computer-readable medium storing at least one instruction, comprising the at least one instruction that is executable by a processor,
wherein the at least one instruction instructs a device to:
provide a service to a terminal based on a first SIM,
detect occurrence of a voice service based on a second SIM of the terminal,
deliver paging with a paging cause to the terminal, and
provide the voice service based on the second SIM after switching the terminal from the first SIM to the second SIM.
